(19) **Europäisches Patentamt / European Patent Office / Office européen des brevets**

(11) **EP 2 153 432 B1**

(12) **FASCICULE DE BREVET EUROPEEN**

(45) Date de publication et mention
de la délivrance du brevet:
**12.09.2012 Bulletin 2012/37**

(21) Numéro de dépôt: **08760801.4**

(22) Date de dépôt: **10.06.2008**

(51) Int Cl.:
***G09G 3/34*** *(2006.01)*     ***G02F 1/13357*** *(2006.01)*

(86) Numéro de dépôt international:
**PCT/EP2008/057242**

(87) Numéro de publication internationale:
**WO 2008/155265 (24.12.2008 Gazette 2008/52)**

(54) **PROCEDE ET DISPOSITIF D'AFFICHAGE D'IMAGES COMPRENANT DEUX ÉTAGES DE MODULATION**

METHODE UND VORRICHTUNG ZUR ANZEIGE VON BILDERN MIT ZWEI MODULATIONSSTUFEN

METHOD AND DEVICE FOR DISPLAYING IMAGES COMPRISING TWO MODULATION STAGES

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **13.06.2007 FR 0755743**

(43) Date de publication de la demande:
**17.02.2010 Bulletin 2010/07**

(73) Titulaire: **Thomson Licensing
92130 Issy-les-Moulineaux (FR)**

(72) Inventeurs:
• **CHEVALLIER, Louis**
  **F-35520 La Meziere (FR)**
• **KERVEC, Jonathan**
  **F-35380 Paimpont (FR)**
• **VIGOUROUX, Jean-Ronan**
  **F-35000 Rennes (FR)**
• **BENOIT, Pascal**
  **F-35340 Liffre (FR)**

(74) Mandataire: **Browaeys, Jean-Philippe et al
Technicolor
1-5 rue Jeanne d'Arc
92130 Issy-les-Moulineaux (FR)**

(56) Documents cités:
**WO-A-02/079862     US-A1- 2005 231 457**

• **SEETZEN HELGE ET AL: "Self-calibrating wide color gamut high dynamic range display" PROC SPIE INT SOC OPT ENG; PROCEEDINGS OF SPIE - THE INTERNATIONAL SOCIETY FOR OPTICAL ENGINEERING; PROCEEDINGS OF SPIE-IS AND T ELECTRONIC IMAGING - HUMAN VISION AND ELECTRONIC IMAGING XII 2007, vol. 6492, 12 février 2007 (2007-02-12), XP002454790**
• **SEETZEN H ET AL: "54.2: A High Dynamic Range Display Using Low and High Resolution Modulators" 2003 SID INTERNATIONAL SYMPOSIUM DIGEST OF TECHNICAL PAPERS. BALTIMORE, MD, MAY 20 - 22, 2003; [SID INTERNATIONAL SYMPOSIUM DIGEST OF TECHNICAL PAPERS], SAN JOSE, CA : SID, US, vol. XXXIV, no. 1, 20 mai 2003 (2003-05-20), pages 1450-1453, XP007008386 cité dans la demande**

**Description**

L'invention concerne un procédé d'affichage d'au moins une image à l'aide de différentes couleurs primaires et à l'aide d'un dispositif comprenant :

- un panneau arrière comprenant un réseau d'éléments de rétroéclairage qui sont modulables en luminance,
- un panneau avant comprenant un réseau de valves optiques aptes à moduler chacune la luminosité d'une seule couleur primaire, qui sont réparties en ensembles élémentaires de valves optiques adjacentes, où chaque ensemble comprend au moins une valve optique pour chacune desdites couleurs primaires,
- et des moyens de couplage optique de chaque élément de rétroéclairage dudit panneau arrière avec un groupe rétroéclairé regroupant plusieurs ensembles élémentaires de valves optiques du panneau avant.

Chaque ensemble élémentaire correspond à un pixel d'une image à afficher. De tels dispositifs à deux étages de modulation en série permettent d'augmenter sensiblement le contraste d'affichage des images (« high dynamic range » ou « HDR » en langue anglaise). Généralement, les éléments de rétro-éclairage sont formés par des diodes électroluminescentes, et les valves optiques sont généralement à cristaux liquides. Les documents US7064740, US2005/231457 et WO02/079862 décrivent de tels dispositifs d'affichage, ainsi que l'article intitulé « A high Dynamic Range Display Using Low and High Resolution Modulators », publié par Helge SEETZEN et Lorne A. WHITEHEAD, dans le compendium des présentations faites à la conférence SID 2003 (§ 54.2, pp. 1450 à 1453).

L'article intitulé « Self-calibrating wide color gamut high dynamic range display », publié le 12 février 2007 par par Helge SEETZEN et al., dans « Proceedings SPIE », vol. 6792 (XP002454790), décrit des moyens pour compenser les dérives chromatiques de diodes électroluminescentes de rétroéclairage de tels dispositifs d'affichage.

L'invention concerne également un dispositif d'affichage d'images apte à la mise en oeuvre d'un tel procédé. Dans les documents précités, seule la luminance ou l'intensité d'émission des éléments de rétroéclairage est ajustée en fonction du contenu des images à afficher.

Un but de l'invention est d'améliorer encore le contraste d'affichage des images, y compris par rapport aux procédés d'affichage décrits dans les documents US7012382 et US6608614 où les éléments de rétroéclairage ne sont pas distribués en réseau et ne sont pas couplés optiquement, chacun, à un groupe rétroéclairé.

Dans de tels dispositifs d'affichage, chaque émetteur des éléments de rétroéclairage est généralement susceptible d'émettre une desdites couleurs primaires. Si l'image est affichée à l'aide de trois couleurs primaires, rouge, verte et bleue, chaque élément de rétroéclairage comprend généralement un émetteur rouge, un émetteur vert et un émetteur bleu. Chaque valve optique d'un ensemble élémentaire de valves optiques, c'est-à-dire d'un pixel à afficher, est apte à moduler une seule couleur primaire, rouge, verte, ou bleue. Il arrive généralement que la valve optique qui est par exemple apte à moduler la couleur primaire rouge module en luminosité non seulement la lumière de l'émetteur rouge, mais également en partie la lumière de l'émetteur vert et/ou de l'émetteur bleu du même élément de rétroéclairage. Cette situation se produit par exemple lorsque, les valves optiques étant des cellules à cristaux liquides dotées de filtres optiques colorés, les valves optiques dotées d'un filtre optique coloré transmettant la couleur primaire rouge transmettent non seulement la lumière émise par les émetteurs rouges mais également, par exemple, la composante rouge, même faible, de la lumière émise par l'émetteur vert ou de l'émetteur bleu. Ces interférences de couleur (« color crosstalk » en langue anglaise) perturbent la qualité d'affichage des images. Un but de l'invention est également d'améliorer la qualité d'affichage des images.

A cet effet, l'invention a pour objet un procédé d'affichage d'au moins une image à l'aide de différentes couleurs primaires selon la revendication 1. L'invention a également pour objet un dispositif d'affichage d'images selon la revendication 4.

La modulation de la « luminosité » (« lightness » ou « brightness » en langue anglaise) d'une couleur donnée par chaque valve optique permet de modifier l'aspect, terne, foncé ou clair de cette couleur. Par extension, on peut également parler de luminance.

Grâce à la modulation de chrominance qui s'ajoute à la modulation de luminance pour les éléments de rétro-éclairage du panneau arrière, le dispositif selon l'invention permet d'afficher les images avec encore plus de contraste et une meilleure qualité.

De préférence, les éléments de rétroéclairage sont modulables en chrominance au moins dans l'ensemble de la gamme de couleurs qui est délimitée par lesdites couleurs primaires.

De préférence, chaque élément de rétroéclairage comprend au moins un émetteur pour chacune desdites couleurs primaires. De préférence, chaque émetteur est susceptible d'émettre une desdites couleurs primaires.

De préférence, lesdits émetteurs sont des diodes électroluminescentes.

De préférence, chaque valve optique comprend une cellule à cristaux liquides pour ladite modulation de luminosité de cette valve et un filtre optique coloré apte à transmettre la couleur primaire dont cette valve est apte à moduler la luminosité.

De préférence, lesdits moyens de couplage optique comprennent un panneau diffuseur de lumière comprenant lui-même une couche arrière de diffusion, une couche avant de diffusion, et une couche épaisse transparente intercalée entre ladite couche arrière de diffusion et ladite couche avant de diffusion.

Dans le procédé d'affichage d'au moins une image à l'aide du dispositif selon l'invention, chaque pixel de cette image à afficher correspond à un ensemble élémentaire de valves optiques dudit panneau avant, et on module à la fois en luminance et en chrominance chaque élément de rétroéclairage dudit panneau arrière en fonction des données d'affichage des pixels de ladite image qui correspondent aux ensembles élémentaires qui appartiennent au même groupe rétroéclairé dudit panneau avant qui est couplé optiquement audit élément de rétroéclairage. En procédant ainsi à l'affichage des images en modulant les éléments de rétroéclairage à la fois en luminance comme dans l'art antérieur mais également en chrominance, on tire bien meilleur parti du réseau d'éléments de rétro-éclairage, et on améliore encore le contraste et surtout la qualité d'affichage des images.

Selon l'invention, pour l'affichage des images, on module également en transmission chaque valve optique du groupe rétroéclairé en fonction de la donnée d'affichage du pixel correspondant à l'ensemble élémentaire auquel appartient cette valve. Selon l'invention, cette donnée d'affichage prend en compte non seulement la couleur primaire dont cette valve est apte à moduler la luminosité, mais également les autres couleurs primaires.

Selon l'invention, on module en transmission chaque valve optique dudit groupe rétroéclairé non seulement en fonction de la donnée d'affichage du pixel correspondant à l'ensemble élémentaire auquel appartient cette valve, mais également en fonction des données d'affichage des pixels correspondant aux autres ensembles élémentaires du même groupe rétro-éclairé. En effet, la luminance et la chrominance de rétroéclairage de chaque valve optique d'un groupe rétroéclairé par un élément de rétroéclairage dépend des données d'affichage des pixels qui correspondent à tous les ensembles élémentaires qui appartiennent au même groupe rétroéclairé, pas seulement de la donnée d'affichage du pixel correspondant à l'ensemble élémentaire auquel cette valve optique appartient. Or, pour le pilotage de chaque valve optique, on sait qu'il convient de tenir compte de son rétro-éclairage, c'est-à-dire, ici, indirectement, des données d'affichage des pixels qui correspondent à tous les ensembles élémentaires qui appartiennent au même groupe rétro-éclairé que cette valve optique. On s'affranchit ainsi des interférences de couleur qui perturbent la qualité d'affichage des images.

De préférence,

- chaque élément de rétroéclairage comprenant au moins un émetteur pour chacune desdites couleurs primaires, chaque émetteur étant associé à un spectre d'émission,
- chaque valve optique comprenant une cellule à cristaux liquides pour ladite modulation de transmission de cette valve et un filtre optique coloré apte à transmettre la couleur primaire dont cette valve est apte à moduler la luminosité, chaque filtre optique coloré étant associé à un spectre de transmission,
- chaque valve optique étant associée à au moins un émetteur pour la couleur primaire dont ladite valve est apte à moduler la luminosité,
- et le spectre de transmission du filtre coloré de ladite valve optique recouvrant non seulement le spectre d'émission dudit émetteur mais également, en partie au moins, le spectre d'émission d'au moins un autre émetteur du même élément de rétro-éclairage pour au moins une autre couleur primaire,

on module également en transmission chaque valve optique dudit groupe rétroéclairé non seulement en fonction de la modulation de l'au moins émetteur associé à cette valve optique, mais aussi en fonction aussi de la modulation de l'au moins un autre émetteur du même élément de rétroéclairage. Généralement, chaque émetteur d'un élément de rétro-éclairage est susceptible d'émettre une desdites couleurs primaires. Si l'image est affichée à l'aide de trois couleurs primaires, rouge, verte et bleue, chaque élément de rétroéclairage comprend généralement un émetteur pour la couleur primaire rouge, un émetteur pour la couleur primaire verte et un émetteur pour la couleur primaire bleue. Ces émetteurs sont généralement pilotables indépendamment les uns des autres pour obtenir une modulation à la fois en luminance et en chrominance de cet élément de rétroéclairage. Chaque valve optique du groupe rétroéclairé couplé optiquement à cet élément de rétroéclairage module en luminosité l'une des couleurs primaires d'affichage en fonction de la donnée d'affichage du pixel correspondant à l'ensemble élémentaire auquel appartient cette valve : une valve optique dotée d'un filtre optique coloré transmettant la couleur primaire rouge transmet non seulement la lumière émise par l'émetteur pour la couleur primaire rouge de l'élément de rétroéclairage, mais également, par exemple, la composante rouge, même faible, de la lumière émise par l'émetteur pour la couleur primaire verte du même élément de rétroéclairage, si, notamment, le spectre de transmission du filtre coloré de cette valve optique recouvre le spectre d'émission de cet émetteur pour la couleur primaire verte. Inévitablement, cette valve optique modulera donc en luminosité non seulement la lumière émise par l'émetteur pour la couleur primaire rouge, mais également, généralement dans une plus faible proportion, la lumière émise par l'émetteur pour la couleur primaire verte. Selon l'invention, pour la modulation de la couleur primaire rouge apportée par cette valve optique, on tient compte non seulement du niveau d'émission modulé de l'émetteur pour la couleur primaire rouge mais également du niveau d'émission modulé de l'émetteur pour la couleur primaire verte. On s'affranchit ainsi des interférences de couleur qui perturbent la qualité d'affichage des images.

Selon une variante, l'un des émetteurs peut émettre deux couleurs primaires : par exemple, si l'image est affichée à l'aide de trois couleurs primaires, rouge, verte et bleue, chaque élément de rétroéclairage peut comporter un émetteur pour la couleur primaire rouge, un émetteur pour la couleur primaire verte, un émetteur pour la couleur primaire bleue, et un émetteur jaune à la fois pour la couleur primaire rouge et pour la couleur primaire verte.

De préférence, pour chaque ensemble élémentaire correspondant à un pixel dont la donnée d'affichage est exprimée par le vecteur couleur $\begin{bmatrix} X \\ Y \\ Z \end{bmatrix}$, le facteur de modulation de transmission $\begin{bmatrix} R_{Mod} \\ G_{Mod} \\ B_{Mod} \end{bmatrix}$ de chaque valve optique $(V_R, V_G, V_B)$ de cet ensemble élémentaire satisfait à l'équation :

$$\begin{bmatrix} X \\ Y \\ Z \end{bmatrix} = \underset{3 \times N}{xyz} \cdot \left( \underset{3 \times N}{rgb}_{LED}^{T} \begin{bmatrix} R_{LED} \\ G_{LED} \\ B_{LED} \end{bmatrix} . * \underset{3 \times N}{rgb}_{Mod}^{T} \begin{bmatrix} R_{Mod} \\ G_{Mod} \\ B_{Mod} \end{bmatrix} \right),$$

où $\begin{bmatrix} R_{LED} \\ G_{LED} \\ B_{LED} \end{bmatrix}$ représente les facteurs de modulation en luminance et en chrominance de l'élément de rétroéclairage couplé optiquement au groupe rétroéclairé auquel ledit ensemble élémentaire appartient,

où $\underset{3 \times N}{xyz} \cdot$ représente la matrice des fonctions colorimétriques des primaires de référence de l'espace de couleur dans lequel les vecteurs de couleur sont exprimés,

où $\underset{3 \times N}{rgb}_{LED}$ représente les spectres d'émission dudit élément de rétroéclairage lorsque tous les facteurs de modulation de cet élément sont nuls sauf un,

où $\underset{3 \times N}{rgb}_{MOD}$ représente les spectres de transmission des filtres colorés de chaque valve $(V_R, V_G, V_B)$ de différentes couleurs primaires dudit même ensemble élémentaire.

Les fonctions colorimétriques sont dénommées « color matching functions matrix » en langue anglaise. Grâce à l'invention, chaque valve optique prend en compte l'ensemble des couleurs primaires émises par l'élément de rétro-éclairage auquel il est couplé, et non pas seulement la couleur primaire spécifique à laquelle elle est associée. On s'affranchit ainsi des « interférences » entre les spectres d'émission de différentes diodes qui composeraient un même élément de rétro-éclairage et les spectres de transmission des filtres optiques colorés des valves optiques d'un même groupe rétro-éclairé . Ce mode de pilotage spécifique permet donc de s'affranchir des « interférences » des interférences de couleur qui perturbent la qualité d'affichage des images.

L'invention sera mieux comprise à la lecture de la description qui va suivre, donnée à titre d'exemple non limitatif, et en référence aux figures annexées sur lesquelles :

- la figure 1 donne le spectre d'émission des différentes diodes d'un élément de rétroéclairage du dispositif d'affichage selon le mode de réalisation de l'invention représenté à la figure 3 ;
- la figure 2 donne le spectre de transmission des filtres colorés des différentes valves optiques d'un ensemble élémentaire d'affichage du dispositif d'affichage selon le mode de réalisation représenté à la figure 3 ;
- la figure 3 représente un mode de réalisation du dispositif d'affichage selon l'invention.

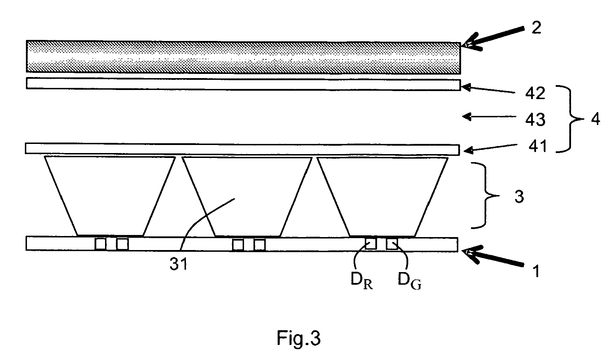

En référence à la figure 3, on va maintenant décrire un dispositif d'affichage d'images à trois couleurs primaires $P_R$, $P_G$, $P_B$ selon un mode de réalisation de l'invention. Ce dispositif comprend :

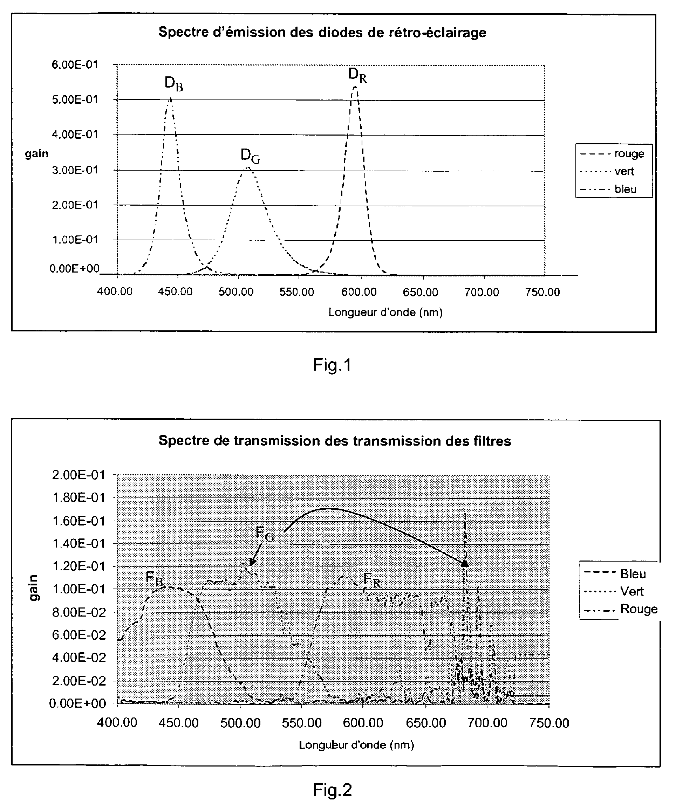

- un panneau arrière 1 comprenant un réseau d'éléments de rétroéclairage qui sont modulables en luminance et en chrominance ; chaque élément de rétroéclairage comprend trois diodes électroluminescentes $D_R$, $D_G$, $D_B$ ($D_B$ non représenté sur la figure 3), ici une diode pour chaque couleur primaire $P_R$, $P_G$, $P_B$, comme décrit par exemple dans le document EP1717633 ; en référence à la figure 1, les spectres d'émission de ces diodes électroluminescentes $D_R$, $D_G$, $D_B$ en fonction de la long ueur d'onde sont représentés par $\underset{3 \times N \; LED}{rgb}$, où N est le nombre de pas d'échantillonnage en longueur d'onde de ces spectres ; on appelle $R_{LED}$, $G_{LED}$, $B_{LED}$ les consignes de modulation respectivement des diodes $D_R$, $D_G$, $D_B$ qui permettent d'obtenir une modulation à la fois en luminance et en chrominance de l'élément de rétroéclairage ;

- un panneau avant 2 comprenant un réseau de valves optiques (non représentées sur la figure 1) ; chaque valve optique comprend une cellule à cristaux liquides permettant de moduler la transmission de cette valve et un filtre optique coloré positionné à l'entrée de cette valve ; ces valves optiques sont réparties en ensembles élémentaires de valves optiques adjacentes, de manière à ce que chaque ensemble élémentaire d'affichage comprenne une valve optique $V_R$, $V_G$, $V_B$ pour chaque couleur primaire $P_R$, $P_G$, $P_B$ ; en référence à la figure 2, les spectres de transmission des filtres colorés $F_R$, $F_G$, $F_B$ de respectivement chaque valve $V_R$, $V_G$, $V_B$ du même ensemble élémentaire d'affichage sont représentés par $\underset{3 \times N \; MOD}{rgb}$, où N est le nombre de pas d'échantillonnage en longueur d'onde de ces spectres ; on appelle $R_{Mod}$, $G_{Mod}$, $B_{Mod}$ les consignes de modulation respectivement des valves $V_R$, $V_G$, $V_B$ d'un même ensemble élémentaire d'affichage, qui permettent d'obtenir une modulation uniquement en luminosité de la couleur filtrée respectivement par les filtres $F_R$, $F_G$, $F_B$ ;

- des moyens de couplage optique 3 de chaque élément de rétroéclairage du panneau arrière 1 avec un groupe rétroéclairé du panneau avant 2 comprenant plusieurs ensembles élémentaires de valves optiques ; de tels moyens de couplage sont décrits par exemple dans le document WO03/077013 où l'on utilise des guides cylindriques à parois réfléchissantes formant une structure en « nid d'abeilles » entre le panneau arrière 1 et le panneau avant 2 ; on utilise ici des guides de lumière coniques 31 tels que décrits, pour une application différente, dans le document US5839823.

Les moyens de couplage optique comprennent également ici un panneau diffuseur de lumière 4 comprenant une couche arrière de diffusion 41, une couche avant de diffusion 42, et une couche épaisse transparente 43, généralement une plaque de verre, intercalée entre les couches de diffusion 41 et 42. La couche arrière de diffusion 41 sert à former une source secondaire de lumière à l'extrémité de chaque guide de lumière 31. Grâce à la couche avant de diffusion 42, la surface émissive vue par un observateur des images affichées par le dispositif apparaîtra avantageusement très proche du panneau avant de valves optiques, ce qui est favorable à la qualité d'affichage. Enfin, grâce à la couche épaisse transparente intercalaire 43, le mélange des rayonnements émis par les différentes diodes d'un même élément de rétroéclairage est amélioré, ce qui améliore l'homogénéité du rétroéclairage. Les différents composants du dispositif d'affichage qui vient d'être décrit sont fabriqués et assemblés d'une manière connue en elle-même. Un avantage de ce dispositif d'affichage est que chaque élément de rétroéclairage est modulables en chrominance au moins dans l'ensemble de la gamme de couleurs qui est délimitée par les couleurs d'émission des diodes de cet élément.

Comme on le voit en comparant les figures 1 et 2, le spectre de transmission de chacun des filtres optiques colorés recouvre les spectres d'émission d'au moins deux diodes électroluminescentes associées à des couleurs primaires différentes. Ce sont ces recouvrements qui induisent notamment des problèmes d'interférence de couleurs auxquels le procédé d'affichage selon l'invention apporte une solution.

On va maintenant décrire un procédé d'affichage d'images à l'aide du dispositif d'affichage d'images qui vient d'être décrit, selon un mode de réalisation de l'invention.

Chaque pixel d'une image à afficher correspond à un ensemble élémentaire d'affichage du panneau avant, regroupant, comme précédemment décrit, des valves optiques adjacentes $V_R$, $V_G$, $V_B$ de différentes couleurs primaires qui peuvent être modulées selon, respectivement, les consignes $R_{Mod}$, $G_{Mod}$, $B_{Mod}$.

D'une manière classique, chaque pixel est codé en un vecteur couleur $\begin{bmatrix} X \\ Y \\ Z \end{bmatrix}$ dans un espace de couleur donné XYZ ; les fonctions spectrales colorimétriques des primaires de référence de cet espace sont regroupées en matrice où N est le nombre de pas d'échantillonnage en longueur d'onde de ces fonctions.

Lorsque les données d'affichage sont uniquement disponibles dans un format classique dit « RGB », ces données peuvent être classiquement converties dans un format dit « XYZ » indépendant de tout dispositif, selon la formule classique :

$$\begin{bmatrix} X_C \\ Y_C \\ Z_C \end{bmatrix} = M_{XYZ}^{-1} \begin{bmatrix} R_C \\ G_C \\ B_C \end{bmatrix},$$

où

$$M_{XYZ} = \begin{Bmatrix} 3.240479 & -1.537150 & -0.498535 \\ -0.969256 & 1.875992 & 0.041556 \\ 0.055648 & -0.204043 & 1.057311 \end{Bmatrix}$$

et où le blanc est l'illuminant classique D65.

Selon l'invention, pour l'affichage de chaque image, par l'application des consignes de modulation $R_{LED}$, $G_{LED}$, $B_{LED}$ respectivement aux diodes $D_R$, $D_G$, $D_B$ de chaque élément de rétroéclairage du panneau arrière, on module à la fois en luminance et en chrominance chaque élément de rétroéclairage du panneau arrière en fonction des vecteurs couleurs $\begin{bmatrix} X \\ Y \\ Z \end{bmatrix}$ des pixels de cette image qui correspondent aux ensembles élémentaires d'affichage qui appartiennent au même groupe rétroéclairé du panneau avant qui est couplé optiquement à cet élément de rétroéclairage. Pour obtenir les consignes de modulation $R_{LED}$, $G_{LED}$, BLED qui déterminent la couleur émise par chaque élément de rétroéclairage, on procède typiquement aux opérations suivantes :

- filtrage spatial passe-bas de l'image à afficher ;
- ré-échantillonnage de l'image à une résolution correspondant aux dimensions des éléments de rétroéclairage ;
- optionnellement, déconvolution spatiale pour limiter les effets de « halo » dus aux diodes.

Simultanément, par l'application des consignes de modulation $R_{Mod}$, $G_{Mod}$, $B_{Mod}$ respectivement aux valves $V_R$, $V_G$, $V_B$ de chaque ensemble élémentaire d'affichage de ce même groupe rétroéclairé, on module uniquement en luminosité la couleur alors émise par cet élément de rétroéclairage et filtrée par les filtres $F_R$, $F_G$, $F_B$ des valves $V_R$, $V_G$, $V_B$ de cet ensemble élémentaire d'affichage.

Comme décrit plus en détail ci-dessous, l'affichage des images est assuré de manière à ce que, pour chaque ensemble élémentaire d'affichage correspondant à un pixel dont la donnée d'image est exprimée par le vecteur couleur $\begin{bmatrix} X \\ Y \\ Z \end{bmatrix}$, le facteur de modulation de transmission $\begin{bmatrix} R_{Mod} \\ G_{Mod} \\ B_{Mod} \end{bmatrix}$ de chaque valve optique ($V_R$, $V_G$, $V_B$) de cet ensemble élémentaire d'affichage satisfait à l'équation :

$$\begin{bmatrix} X \\ Y \\ Z \end{bmatrix} = xyz_{3\times N} \cdot (rgb_{3\times N\ LED}^{\ \ \ \ \ \ \ T} \begin{bmatrix} R_{LED} \\ G_{LED} \\ B_{LED} \end{bmatrix} .* rgb_{3\times N\ Mod}^{\ \ \ \ \ \ \ T} \begin{bmatrix} R_{Mod} \\ G_{Mod} \\ B_{Mod} \end{bmatrix}).$$

Pour résoudre cette équation et déterminer les valeurs de $R_{Mod}$, $G_{Mod}$, $B_{Mod}$, on procède par exemple par itérations successives comme suit :

- 1) on prend une valeur initiale $\begin{bmatrix} G_{Mod} \\ B_{Mod} \end{bmatrix} := \begin{bmatrix} G_{LED} \\ B_{LED} \end{bmatrix}$ ;

- 2) on calcule alors $\begin{bmatrix} X' \\ Y' \\ Z' \end{bmatrix} = xyz \cdot (rgb_{3 \times N}^T \, {}_{LED} \begin{bmatrix} R_{LED} \\ G_{LED} \\ B_{LED} \end{bmatrix} .* rgb_{3 \times N}^T \, {}_{Mod} \begin{bmatrix} R_{Mod} \\ G_{Mod} \\ B_{Mod} \end{bmatrix})$,

- 3) on en déduit l'écart $\Delta = Abs \, (\begin{bmatrix} X' \\ Y' \\ Z' \end{bmatrix} - \begin{bmatrix} X \\ Y \\ Z \end{bmatrix})$ ,

- et on revient à l'étape 1) ci-dessus avec une nouvelle valeur

$$\begin{bmatrix} R_{Mod} \\ G_{Mod} \\ B_{Mod} \end{bmatrix} := \begin{bmatrix} R_{Mod} \\ G_{Mod} \\ B_{Mod} \end{bmatrix} .* (\begin{bmatrix} X \\ Y \\ Z \end{bmatrix} ./ \begin{bmatrix} X' \\ Y' \\ Z' \end{bmatrix}) .$$

On répète les opérations 1) à 3) jusqu'à ce que l'écart $\Delta$ soit inférieur à un seuil prédéterminé.

En procédant ainsi à l'affichage des images en modulant les éléments de rétroéclairage à la fois en luminance comme dans l'art antérieur mais également en chrominance, on tire bien meilleur parti du réseau d'éléments de rétro-éclairage du panneau arrière 1, et on améliore encore le contraste et surtout la qualité d'affichage des images.

La qualité d'affichage est améliorée parce que, notamment, la modulation de chaque valve prend en compte non seulement la couleur primaire dont cette valve est apte à moduler la luminosité, mais également les autres couleurs primaires, ce qui permet de s'affranchir des interférences de couleurs.

La présente invention a été décrite en se référant à un panneau arrière de rétroéclairage à base de diodes électroluminescentes ; il est évident pour l'homme du l'art qu'elle peut s'appliquer à d'autres types d'émetteurs sans sortir du cadre des revendications ci-après.

La présente invention a été décrite en se référant à un panneau avant de valves optiques à base de cristaux liquides ; il est évident pour l'homme du l'art qu'elle peut s'appliquer à d'autres types de valves optiques sans sortir du cadre des revendications ci-après.

## Revendications

1. Procédé d'affichage d'au moins une image à l'aide de différentes couleurs primaires et à l'aide d'un dispositif comprenant :

   - un panneau arrière (1) comprenant un réseau d'éléments de rétroéclairage ($D_R$, $D_G$) qui sont, chacun, modulables en luminance et en chrominance,
   - un panneau avant (2) comprenant un réseau de valves optiques aptes à moduler chacune la transmission d'une seule couleur primaire, qui sont réparties en ensembles élémentaires de valves optiques adjacentes, où chaque ensemble élémentaire comprend au moins une valve optique pour chacune desdites couleurs primaires,
   - et des moyens de couplage optique (3, 4) de chaque élément de rétroéclairage dudit panneau arrière (1) avec un groupe rétroéclairé regroupant plusieurs ensembles élémentaires de valves optiques du panneau avant (2),

   où chaque pixel de cette image à afficher correspond à un ensemble élémentaire de valves optiques dudit panneau avant,

   procédé dans lequel :

   - on module à la fois en luminance et en chrominance chaque élément de rétroéclairage dudit panneau arrière en fonction des données d'affichage des pixels de ladite image qui correspondent aux ensembles élémentaires qui appartiennent au même groupe rétroéclairé dudit panneau avant qui est couplé optiquement audit élément de rétroéclairage,

ledit procédé étant **caractérisé en ce qu'**on module en transmission chaque valve optique dudit groupe rétroéclairé en fonction de la donnée d'affichage du pixel correspondant à l'ensemble élémentaire auquel appartient cette valve et également en fonction des données d'affichage des pixels correspondant aux autres ensembles élémentaires du même groupe rétro-éclairé.

2. Procédé d'affichage selon la revendication 1 **caractérisé en ce que**,

   - chaque élément de rétroéclairage comprenant au moins un émetteur pour chacune desdites couleurs primaires, chaque émetteur étant associé à un spectre d'émission et étant contrôlé pour moduler en luminance et en chrominance ledit élément de rétroéclairage,
   - chaque valve optique comprenant une cellule à cristaux liquides pour ladite modulation de transmission de cette valve et un filtre optique coloré apte à transmettre la couleur primaire dont cette valve est apte à moduler la transmission, chaque filtre optique coloré étant associé à un spectre de transmission,
   - chaque valve optique étant associée à au moins un émetteur pour la couleur primaire dont ladite valve est apte à moduler la transmission,
   - et le spectre de transmission du filtre coloré de ladite valve optique recouvrant non seulement le spectre d'émission dudit émetteur mais également, en partie au moins, le spectre d'émission d'au moins un autre émetteur du même élément de rétro-éclairage pour au moins une autre couleur primaire,

   on module également en transmission chaque valve optique dudit groupe rétroéclairé non seulement en fonction du contrôle de l'au moins un émetteur associé à cette valve optique, mais aussi en fonction aussi du contrôle d'au moins un autre émetteur du même élément de rétroéclairage.

3. Procédé d'affichage d'image selon la revendication 1, **caractérisé en ce que** :

   - chaque élément de rétroéclairage comprenant au moins un émetteur pour chacune desdites couleurs primaires,
   - chaque valve optique comprenant une cellule à cristaux liquides pour ladite modulation de transmission de cette valve et un filtre optique coloré apte à transmettre la couleur primaire dont cette valve est apte à moduler la transmission,

pour chaque ensemble élémentaire correspondant à un pixel dont la donnée d'affichage est exprimée par le vecteur

couleur $\begin{bmatrix} X \\ Y \\ Z \end{bmatrix}$, le facteur de modulation de transmission $\begin{bmatrix} R_{Mod} \\ G_{Mod} \\ B_{Mod} \end{bmatrix}$ de chaque valve optique ($V_R$, $V_G$, $V_B$) de cet ensemble élémentaire satisfait à l'équation :

$$\begin{bmatrix} X \\ Y \\ Z \end{bmatrix} = \underset{3 \times N}{xyz} \cdot \left( \underset{3 \times N}{rgb}^T_{LED} \begin{bmatrix} R_{LED} \\ G_{LED} \\ B_{LED} \end{bmatrix} .* \underset{3 \times N}{rgb}^T_{Mod} \begin{bmatrix} R_{Mod} \\ G_{Mod} \\ B_{Mod} \end{bmatrix} \right),$$

où $\begin{bmatrix} R_{LED} \\ G_{LED} \\ B_{LED} \end{bmatrix}$ représente les facteurs de modulation en luminance et en chrominance de l'élément de rétroéclairage couplé optiquement au groupe rétroéclairé auquel ledit ensemble élémentaire appartient,

où $\underset{3 \times N}{xyz}$ représente la matrice des fonctions colorimétriques des primaires de référence de l'espace de couleur dans lequel les vecteurs de couleur sont exprimés,

où $\underset{3 \times N}{rgb}_{LED}$ représente les spectres d'émission dudit élément de rétroéclairage lorsque tous les facteurs de modulation de cet élément sont nuls sauf un, où $\underset{3 \times N}{rgb}_{MOD}$ représente les spectres de transmission des filtres colorés de chaque valve ($V_R$, $V_G$, $V_B$) de différentes couleurs primaires dudit même ensemble élémentaire.

**4.** Dispositif d'affichage d'images apte à la mise en oeuvre du procédé selon l'une quelconque des revendications précédentes, comprenant :

- un panneau arrière (1) comprenant un réseau d'éléments de rétroéclairage ($D_R$, $D_G$) qui sont, chacun, modulables en luminance et en chrominance,
- un panneau avant (2) comprenant un réseau de valves optiques aptes à moduler chacune la transmission d'une seule couleur primaire, qui sont réparties en ensembles élémentaires de valves optiques adjacentes, où chaque ensemble élémentaire comprend au moins une valve optique pour chacune desdites couleurs primaires,
- des moyens de couplage optique (3, 4) de chaque élément de rétroéclairage dudit panneau arrière (1) avec un groupe rétroéclairé regroupant plusieurs ensembles élémentaires de valves optiques du panneau avant (2), où chaque élément de rétroéclairage comprend au moins un émetteur pour chacune desdites couleurs primaires, chaque émetteur étant associé à un spectre d'émission, où chaque pixel d'une image à afficher correspond à un ensemble élémentaire de valves optiques dudit panneau avant,
- des moyens pour moduler à la fois en luminance et en chrominance chaque élément de rétroéclairage dudit panneau arrière en fonction des données d'affichage des pixels de ladite image qui correspondent aux ensembles élémentaires qui appartiennent au même groupe rétroéclairé dudit panneau avant qui est couplé optiquement audit élément de rétroéclairage,
- des moyens pour moduler en transmission chaque valve optique dudit groupe rétroéclairé en fonction de la donnée d'affichage du pixel correspondant à l'ensemble élémentaire auquel appartient cette valve et également en fonction des données d'affichage des pixels correspondant aux autres ensembles élémentaires du même groupe rétro-éclairé.

**5.** Dispositif d'affichage selon la revendication 4 **caractérisé en ce que** chaque valve optique comprend une cellule à cristaux liquides pour ladite modulation de transmission de cette valve et un filtre optique coloré apte à transmettre la couleur primaire dont cette valve est apte à moduler la transmission, chaque filtre optique coloré étant associé à un spectre de transmission.

**6.** Dispositif d'affichage selon la revendication 5 **caractérisé en ce que** chaque valve optique est associée à au moins un émetteur pour la couleur primaire dont ladite valve est apte à moduler la transmission, et **en ce que** le spectre de transmission du filtre coloré de ladite valve optique recouvre non seulement le spectre d'émission dudit émetteur mais également, en partie au moins, le spectre d'émission d'au moins un autre émetteur du même élément de rétroéclairage pour au moins une autre couleur primaire.

**7.** Dispositif d'affichage selon l'une quelconque des revendications précédentes 4 à 6 **caractérisé en ce que** lesdits émetteurs sont des diodes électroluminescentes.

**8.** Dispositif d'affichage selon l'une quelconque des revendications 4 à 7 **caractérisé en ce que** lesdits moyens de couplage optique comprennent un panneau diffuseur de lumière (4) comprenant lui-même une couche arrière de diffusion (41), une couche avant de diffusion (42), et une couche épaisse transparente (43) intercalée entre ladite couche arrière de diffusion (41) et ladite couche avant de diffusion (42).

**Claims**

**1.** Method for the display of at least one image with the aid of different primary colours and with the aid of a device comprising:

- a rear panel (1) comprising a network of backlighting elements ($D_R$, $D_G$) which each have modulatable luminance and chrominance,
- a front panel (2) comprising a network of optical valves which are each capable of modulating the transmission of a single primary colour and which are distributed in the form of elementary sets of adjacent optical valves, where each elementary set comprises at least one optical valve for each of the said primary colours,
- and means (3, 4) for the optical coupling of each backlighting element of the said rear panel (1) to a backlit group grouping together a plurality of elementary sets of optical valves of the front panel (2),

where each pixel of this image to be displayed corresponds to an elementary set of optical valves of the said front panel,
in which method:

- both the luminance and the chrominance of each backlighting element of the said rear panel are modulated as a function of the display data of the pixels of the said image which correspond to the elementary sets belonging to the same backlit group of the said front panel which is coupled optically to the said backlighting element,

said method being **characterized in that** the transmission of each optical valve of the said backlit group is modulated as a function of the display datum of the pixel corresponding to the elementary set to which this valve belongs and is likewise modulated as a function of the display data of the pixels corresponding to the other elementary sets of the same backlit group.

2. Display method according to Claim 1, **characterized in that**,

- each backlighting element comprising at least one emitter for each of the said primary colours, where said emitter is associated with an emission spectrum and is controlled to modulate in luminance and chrominance said backlighting element,
- each optical valve comprising a liquid-crystal cell for the said transmission modulation of this valve, and a coloured optical filter capable of transmitting the primary colour, the transmission of which this valve is capable of modulating, each coloured optical filter being associated with a transmission spectrum,
- each optical valve being associated with at least one emitter for the primary colour, the transmission of which the said valve is capable of modulating,
- and the transmission spectrum of the coloured filter of the said optical valve covering not only the emission spectrum of the said emitter, but also, at least partially, the emission spectrum of at least one other emitter of the same backlighting element for at least one other primary colour,

the transmission of each optical valve of the said backlit group is likewise modulated not only as a function of the control of the at least one emitter associated with this optical valve, but also as a function of the control of the at least one other emitter of the same backlighting element.

3. Image display method according to Claim 1, **characterized in that**:

- each backlighting element comprising at least one emitter for each of the said primary colours,
- each optical valve comprising a liquid-crystal cell for the said transmission modulation of this valve, and a coloured optical filter capable of transmitting the primary colour, the transmission of which this valve is capable of modulating,
for each elementary set corresponding to a pixel, the display datum of which is expressed by the colour vector

$\begin{bmatrix} X \\ Y \\ Z \end{bmatrix}$ , the transmission modulation factor $\begin{bmatrix} R_{Mod} \\ G_{Mod} \\ B_{Mod} \end{bmatrix}$ of each optical valve ($V_R$, $V_G$, $V_B$) of this elementary set conforms to the equation:

$$\begin{bmatrix} X \\ Y \\ Z \end{bmatrix} = \underset{3\times N}{xyz} \cdot \left( \underset{3\times N}{rgb} \underset{LED}{}^{T} \begin{bmatrix} R_{LED} \\ G_{LED} \\ B_{LED} \end{bmatrix} .* \underset{3\times N}{rgb} \underset{Mod}{}^{T} \begin{bmatrix} R_{Mod} \\ G_{Mod} \\ B_{Mod} \end{bmatrix} \right),$$

where $\begin{bmatrix} R_{LED} \\ G_{LED} \\ B_{LED} \end{bmatrix}$ represents the luminance and chrominance modulation factors of the backlighting element coupled optically to the backlit group to which the said elementary set belongs,

where $\underset{3\times N}{xyz} \cdot$ represents the matrix of the colorimetric functions of the reference primaries of the colour space in which the colour vectors are expressed,

where $\underset{3\times N}{rgb}{}_{LED}$ represents the emission spectra of the said backlighting element when all the modulation factors of this element are zero, except one,

where $\underset{3\times N}{rgb}{}_{MOD}$ represents the transmission spectra of the coloured filters of each valve ($V_R$, $V_G$, $V_B$) of different primary colours of the said same elementary set.

4. Image display device able to carry out the method according to any one of the preceding claims, comprising:

- a rear panel (1) comprising a network of backlighting elements ($D_R$, $D_G$) which each have modulatable luminance and chrominance,
- a front panel (2) comprising a network of optical valves which are each capable of modulating the transmission of a single primary colour and which are distributed in the form of elementary sets of adjacent optical valves, where each elementary set comprises at least one optical valve for each of the said primary colours,
- and means (3, 4) for the optical coupling of each backlighting element of the said rear panel (1) to a backlit group grouping together a plurality of elementary sets of optical valves of the front panel (2),
**characterized in that** each backlighting element comprises at least one emitter for each of the said primary colours, each emitter being associated with an emission spectrum
wherein each pixel of this image to be displayed corresponds to an elementary set of optical valves of the said front panel,
- means for modulating both the luminance and the chrominance of each backlighting element of the said rear panel as a function of the display data of the pixels of the said image which correspond to the elementary sets belonging to the same backlit group of the said front panel which is coupled optically to the said backlighting element,
- means for modulating the transmission of each optical valve of the said backlit group as a function of the display datum of the pixel corresponding to the elementary set to which this valve belongs and likewise as a function of the display data of the pixels corresponding to the other elementary sets of the same backlit group.

5. Display device according to Claim 4, **characterized in that** each optical valve comprises a liquid-crystal cell for the said transmission modulation of this valve, and a coloured optical filter capable of transmitting the primary colour, the transmission of which this valve is capable of modulating, each coloured optical filter being associated with a transmission spectrum.

6. Display device according to Claim 5, **characterized in that** each optical valve is associated with at least one emitter for the primary colour, the transmission of which of the said valve is capable of modulating, and **in that** the transmission spectrum of the coloured filter of the said optical valve covers not only the emission spectrum of the said emitter, but also, at least partially, the emission spectrum of at least one other emitter of the same backlighting element for at least one other primary colour.

7. Display device according to any one of the preceding claims 4 to 6, **characterized in that** the said emitters are light-emitting diodes.

8. Display device according to any one of Claims 4 to 7, **characterized in that** the said optical coupling means comprise a light diffuser panel (4) itself comprising a rear diffusion layer (41), a front diffusion layer (42), and a transparent thick layer (43) inserted between the said rear diffusion layer (41) and the said front diffusion layer (42).

**Patentansprüche**

1. Verfahren, um mindestens ein Bild mit Hilfe verschiedener Primärfarben und mit Hilfe einer Vorrichtung anzuzeigen, welche Folgendes umfasst:

   - eine Rückplatte (1) mit einem Gitter aus Hinterleuchtungselementen ($D_R$, $D_G$), die jeweils eine Luminanz- und Chrominanzmodulation erfahren können,
   - eine Frontplatte (2) mit einem Gitter aus optischen Ventilen, die geeignet sind, jeweils die Transmission einer einzigen Primärfarbe zu modulieren, und die auf Grundmengen von aneinander grenzenden optischen Ventilen verteilt sind, wobei jede Grundmenge mindestens ein optisches Ventil für jede der Primärfarben umfasst, und
   - Mittel für die optische Kopplung (3, 4) jedes Hinterleuchtungselements der Rückplatte (1) mit einer hinterleuchteten Gruppe, die mehrere Grundmengen von optischen Ventilen der Frontplatte (2) zusammenfasst, wobei jedes Pixel dieses anzuzeigenden Bilds einer Grundmenge von optischen Ventilen der Frontplatte entspricht,
   bei dem
   - jedes Hinterleuchtungselement der Rückplatte in Abhängigkeit von den Daten zur Anzeige der Pixel des Bilds, die den Grundmengen entsprechen, die zu derselben hinterleuchteten Gruppe der Frontplatte gehören, die optisch mit dem Hinterleuchtungselement gekoppelt ist, gleichzeitig eine Luminanz- und Chrominanzmodulation erfährt,

   **dadurch gekennzeichnet, dass** jedes optische Ventil der hinterleuchteten Gruppe in Abhängigkeit von dem Datum zur Anzeige des Pixels, das der Grundmenge entspricht, zu der dieses Ventil gehört, sowie in Abhängigkeit von den Daten zur Anzeige der Pixel, die den anderen Grundmengen derselben hinterleuchteten Gruppe entsprechen, eine Transmissionsmodulation erfährt.

2. Anzeigeverfahren nach Anspruch 1, **dadurch gekennzeichnet, dass**,

   - wenn jedes Hinterleuchtungselement mindestens einen Sender für jede der Primärfarben umfasst, wobei jeder Sender einem Emissionsspektrum zugeordnet ist und gesteuert ist, damit das Hinterleuchtungselement eine Luminanz- und Chrominanzmodulation erfährt,
   - wenn jedes optische Ventil eine Flüssigkristallzelle für die Transmissionsmodulation dieses Ventils und ein optisches Farbfilter umfasst, das geeignet ist, die Primärfarbe zu transmittieren, deren Transmission von diesem Ventil moduliert werden kann, wobei jedes optische Farbfilter einem Transmissionsspektrum zugeordnet ist,
   - wenn jedes optische Ventil mindestens einem Sender für die Primärfarbe zugeodnet ist, deren Transmission von dem Ventil moduliert werden kann, und
   - wenn das Transmissionsspektrum des Farbfilters des optischen Ventils nicht nur das Emissionsspektrum des Senders, sondern auch zumindest teilweise das Emissionsspektrum mindestens eines anderen Senders desselben Hinterleuchtungselements für mindestens eine andere Primärfarbe abdeckt,

   jedes optische Ventil der hinterleuchteten Gruppe nicht nur in Abhängigkeit von der Steuerung des mindestens einen diesem optischen Ventil zugeordneten Senders, sondern auch in Abhängigkeit von der Steuerung mindestens eines anderen Senders desselben Hinterleuchtungselements ebenfalls eine Transmissionsmodulation erfährt.

3. Anzeigeverfahren nach Anspruch 1, **dadurch gekennzeichnet, dass**,

   - wenn jedes Hinterleuchtungselement mindestens einen Sender für jede der Primärfarben umfasst,
   - wenn jedes optische Ventil eine Flüssigkristallzelle für die Transmissionsmodulation dieses Ventils und ein optisches Farbfilter umfasst, das geeignet ist, die Primärfarbe zu transmittieren, deren Transmission von diesem Ventil moduliert werden kann,

für jede Grundmenge, die einem Pixel entspricht, dessen Anzeigedatum durch den Farbvektor $\begin{bmatrix} X \\ Y \\ Z \end{bmatrix}$ ausgedrückt wird, der Faktor für die Transmissionsmodulation $\begin{bmatrix} R_{Mod} \\ G_{Mod} \\ B_{Mod} \end{bmatrix}$ jedes opischen Ventils ($V_R$, $V_G$, $V_B$) dieser Grundmenge sich zu der Gleichung

$$\begin{bmatrix} X \\ Y \\ Z \end{bmatrix} = \underset{3\times N}{xyz} \cdot \left( \underset{3\times N}{rgb}^T_{LED} \begin{bmatrix} R_{LED} \\ G_{LED} \\ B_{LED} \end{bmatrix} \cdot * \underset{3\times N}{rgb}^T_{Mod} \begin{bmatrix} R_{Mod} \\ G_{Mod} \\ B_{Mod} \end{bmatrix} \right)$$

ergibt,

wobei $\begin{bmatrix} R_{LED} \\ G_{LED} \\ B_{LED} \end{bmatrix}$ die Faktoren für die Luminanz- und Chrominanzmodulation des Hinterleuchtungselements darstellt, das optisch mit der hinterleuchteten Gruppe gekoppelt ist, zu der die Grundmenge gehört,

wobei $\underset{3\times N}{xyz} \cdot$ die Matrix der kolorimetrischen Funktionen der Referenzprimärfarben des Farbraums darstellt, in dem die Farbvektoren ausgedrückt sind,

wobei $\underset{3\times N}{rgb}_{LED}$ die Emissionsspektren des Hinterleuchtungselements darstellt, wenn alle Faktoren für die Modulation dieses Elements bis auf einen gleich Null sind,

wobei $\underset{3\times N}{rgb}_{MOD}$' die Transmissionsspektren der Farbfilter jedes Ventils ($V_R$, $V_G$, $V_B$) für verschiedene Primärfarben derselben Grundmenge darstellt.

4. Vorrichtung für die Anzeige von Bildern, die geeignet ist, das Verfahren nach einem beliegiben der vorhergehenden Ansprüche umzusetzen, umfassend:

- eine Rückplatte (1) mit einem Gitter aus Hinterleuchtungselementen ($D_R$, $D_G$), die jeweils eine Luminanz- und Chrominanzmodulation erfahren können,
- eine Frontplatte (2) mit einem Gitter aus optischen Ventilen, die geeignet sind, jeweils die Transmission einer einzigen Primärfarbe zu modulieren, und die auf Grundmengen von aneinander grenzenden optischen Ventilen verteilt sind, wobei jede Grundmenge mindestens ein optisches Ventil für jede der Primärfarben umfasst, und
- Mittel für die optische Kopplung (3, 4) jedes Hinterleuchtungselements der Rückplatte (1) mit einer hinterleuchteten Gruppe, die mehrere Grundmengen von optischen Ventilen der Frontplatte (2) zusammenfasst, wobei jedes Hinterleuchtungselement mindestens einen Sender für jede der Primärfarben umfasst, wobei jeder Sender einem Emissionsspektrum zugeordnet ist, wobei jedes Pixel eines anzuzeigenden Bilds einer Grundmenge von optischen Ventilen der Frontplatte entspricht,
- Mittel, um jedes Hinterleuchtungselement der Rückplatte in Abhängigkeit von den Daten zur Anzeige der Pixel des Bilds, die den Grundmengen entsprechen, die zu derselben hinterleuchteten Gruppe der Frontplatte gehören, die optisch mit dem Hinterleuchtungselement gekoppelt ist, gleichzeitig einer Luminanz- und Chrominanzmodulation zu unterziehen,

- Mittel, um jedes optische Ventil der hinterleuchteten Gruppe in Abhängigkeit von dem Datum zur Anzeige des Pixels, das der Grundmenge entspricht, zu der dieses Ventil gehört, sowie in Abhängigkeit von den Daten zur Anzeige der Pixel, die den anderen Grundmengen derselben hinterleuchteten Gruppe entsprechen, einer Transmissionsmodulation zu unterziehen.

5. Anzeigevorrichtung nach Anspruch 4, **dadurch gekennzeichnet, dass** jedes optische Ventil eine Flüssigkristallzelle für die Transmissionsmodulation dieses Ventils und ein optisches Farbfilter umfasst, das geeignet ist, die Primärfarbe zu transmittieren, deren Transmission von diesem Ventil moduliert werden kann, wobei jedes optische Farbfilter einem Tansmissionsspektrum zugeordnet ist.

6. Anzeigevorrichtung nach Anspruch 5, **dadurch gekennzeichnet, dass** jedes optische Ventil mindestens einem Sender für die Primärfarbe zugeordnet ist, deren Transmission von dem Ventil moduliert werden kann, und dass das Transmissionsspektrum des Farbfilters des optischen Ventils nicht nur das Emissionsspektrum des Senders, sondern auch zumindest teilweise das Emissionsspektrum mindestens eines anderen Senders desselben Hinterleuchtungselements für mindestens eine andere Primärfarbe abdeckt.

7. Anzeigevorrichtung nach einem beliebigen der vorhergehenden Ansprüche 4 bis 6, **dadurch gekennzeichnet, dass** es sich bei den Sendern um elektrolumineszente Dioden handelt.

8. Anzeigevorrichtung nach einem beliebigen der vorhergehenden Ansprüche 4 bis 7, **dadurch gekennzeichnet, dass** die Mittel für die optische Kopplung eine Lichtstreuungsplatte (4) umfassen, die selbst eine rückseitige Streuungsschicht (41), eine vorderseitige Streuungsschicht (42) und eine dicke durchsichtige Schicht (43) umfasst, die zwischen der rückseitigen Streuungsschicht (41) und der vorderseitigen Streuungsschicht (42) angeordnet ist.

Fig.1

Fig.2

Fig.3

## RÉFÉRENCES CITÉES DANS LA DESCRIPTION

**Documents brevets cités dans la description**

- US 7064740 B
- US 2005231457 A
- WO 02079862 A
- US 7012382 B
- US 6608614 B
- EP 1717633 A
- WO 03077013 A
- US 5839823 A

**Littérature non-brevet citée dans la description**

- **HELGE SEETZEN ; LORNE A. WHITEHEAD.** A high Dynamic Range Display Using Low and High Resolution Modulators. *compendium des présentations faites à la conférence SID,* 2003, 1450-1453
- **HELGE SEETZEN et al.** Self-calibrating wide color gamut high dynamic range display. *Proceedings SPIE,* 12 Février 2007, vol. 6792